# EUROPEAN PATENT APPLICATION

(11) **EP 2 432 278 A1**
(43) Date of publication of application: **21.03.2012**
(21) Application number: 10251622.6
(22) Date of filing: 21.09.2010
(51) Int. Cl.: H04W 28/24, H04W 84/12

(54) **Traffic management scheme**

(71) Applicant: British Telecommunications public limited company, London EC1A 7AJ (GB)
(72) Inventor: The designation of the inventor has not yet been filed
(74) Representative: Brinck, Coreena Fiona Anne

(57) **Abstract**

A method of managing data traffic carried over a broadband communications network by receiving a stream of data packets originating from a source address associated with a communications device, associating the communications-enabled device with a predetermined service identifier; and, controlling the transmission of said data packets over said broadband communications network in accordance with a traffic profile associated with said service identifier for a type of content of the data packets. In this way, voice traffic originating from a cellular communications device which has wireless broadband communications capabilities can be assigned a traffic profile which deters use of a wireless local area network (WLAN) for certain types of traffic, for example, real-time streamed traffic such as live or voice traffic. This traffic profile is imposed in one embodiment by increasing the variability of the delay experienced by such a data packet stream selectively over the variability of delay experienced by other types of data traffic generated by said device. As such data traffic is often bandwidth intensive, by deterring use of the local area network for such types of data traffic, more bandwidth is made available for other types of traffic. This is particularly useful where the wireless LAN access network is provided by a residential access point which offers roaming or guest access with limited bandwidth.

## Description

The present invention relates to a method of managing traffic which originates from a wireless communications device in a local area network. In particular but not exclusively, the invention relates to a method of managing traffic generated by a dual-communications mode (e.g. cellular/WLAN ) device which comprises a stream of data packets carrying data for playback in real-time, such as live voice communications, and to related aspects.

Mobile network services now offer communications devices to service subscribers which have multiple wireless network access resources. Such communications devices are often configured to use cellular network services for voice and some data communications. However, where such devices additionally have alternative wireless communications connectivity, they may be configured to use such services instead for many types of data applications. Typically, as such wireless local area networks use protocols such as 802.11 (also referred to in the art as Wi-Fi), as well as 802.16 (also referred to in the art as Wi-Max), connectivity speeds may be higher than those the cellular communications network can support. Moreover, it is often desirable to use a wireless local area network (WLAN) supporting such a communications protocol for data services from the end-user's cost perspective.

Accordingly, as the data speeds often available in local area networks are usually high enough to support quite bandwidth intensive applications, and as the relative cost may be lower than using a cellular data service, many users of devices with such multiple network access capabilities will utilise a wireless LAN when this is available rather than utilise a cellular wireless network to establish connectivity to the internet to access various services as well as for data downloading.

The use of mobile communications devices with the capability to utilise cellular or wireless LAN communications networks is sufficiently high that small network capacity LANs, such as may be offered by private subscriber's sharing their wireless network access connectivity with guest or roaming users within coverage areas of less than 20 or so meters may generate a considerable amount of traffic. En-masse usage of wireless LAN network resources by such devices can have negative effects for other users who do not have alternative access resources.

Many network operators encourage subscribers to wireless broadband services to share their access with guest or roaming users as a way of generating more widespread WLAN network coverage. Roaming wireless network access services enable mobile communications devices to have connectivity to the public Internet or other types of networks devices at several different locations by enabling the devices to use several different WLANs. For example, community open-access WLAN schemes, such as FON™ or BT FON™ provide such a roaming service. Community open-access WLAN schemes are implemented by requiring members to provision their own private wireless access points to provide a WLAN to which guest (or roaming) devices can attach. Depending on the locality of the WLAN access points, the members of the community access schemes benefit from Internet connectivity outside the area of network coverage that their own WLAN supports. However, the bandwidth which is made available for roaming users on such open-access wireless LANs is often very limited as it may impact use by other subscribers. Accordingly, it is helpful if roaming usage can be managed in such a way that as many users as possible are able to benefit from the open access wireless network provided by each WLAN AP.

The subscriber entity in control of a wireless local area network (WLAN) access point (AP) has the ability in most situations to turn on or off the guest or roaming network the access point may provide, but may have no further ability as regards traffic management. The WLAN AP feeds in traffic over the public access network, and the public access network operator must then manage the network resources to cope with whatever traffic is received, One object of the invention seeks to provide a method of traffic management for WLANs which is implemented remotely by managing the transmission characteristics of traffic generated by roaming devices located within wireless local area networks when the traffic enters or is being communicated within another network domain such as a public access network. The method can be implemented remotely from the wireless local area network, for example by an access network operator, which enables the access network operator to indirectly shape traffic generated by devices within the wireless local area network. In particular, traffic which originates from a communications device which has the capability of utilising an alternative wireless access network service, such as a cellular communications network. The traffic is selectively managed so that one or more specific types of data traffic are deterred from the access network. The traffic may be re-routed over alternative networks either automatically by the device or by a user of the device selecting the alternative network. In this way, for example, applications which generate, for example, data packet streams for real-time playback, including live traffic streams such as those which carry voice communications as payload, instead consume bandwidth over a cellular network service.

Another object of the invention seeks to provide a method of managing the transmission of data originating in a WLAN which offers a roaming service to mobile communications devices, particularly devices which have cellular communications capability. For example, if the roaming service requires authentication using a suitable user or device identifier which enables association with a service identifier, the service identifier may be modified to indicate that the transmission of certain types of data should be modified. The WLAN may be provided by an access point located on residential or commercial premises, and may operate an open-access or proprietary access roaming scheme.

A first aspect of the invention seeks to provide a method of controlling the transmission of wireless data traffic originating from a mobile communications device having multiple wireless communications network access capabilities, the method comprising: receiving traffic from a local area network; determining a source address for said traffic; associating said source address with a service identifier; modifying at least one characteristic of a transmission service for traffic of at least one predetermined type having said source address, said transmission characteristic being modified in dependence on said service identifier and applied to traffic to be forwarded out of said local area network; and forwarding said traffic for onwards transmission with said modified transmission characteristic.

A said predetermined type of traffic may comprise a real-time stream of data packets. A characteristic of the transmission characteristic may be modified by applying a variable delay to said data packets.

The real-time stream of data packets may comprise data packets carrying audio data as payload, and/or comprise data packets carrying video data as payload and/or comprise data packets carrying voice data as payload. The data packets carrying voice data as payload may comprise Internet Protocol data packets carrying voice traffic (VoIP).

Responsive to the modified transmission characteristics of said traffic, the device may automatically terminate an application generating said traffic.

The other communications network may comprise a cellular communications network.

Another aspect of the invention seeks to provide a method of managing data traffic carried over a broadband communications network, the method comprising: receiving a stream of data packets originating from a source address associated with a communications enabled device; determining if the communications-enabled device is associated with a predetermined service identifier; and, if so determining if the data packets comprise a predetermined type of traffic, and if so, controlling the transmission of said data packets over said broadband communications network by increasing the variability of the delay experienced by said stream of packets selectively over the variability of delay experienced by other types of data traffic generated by said device.

Another aspect of the invention seeks to provide a communications system arranged to manage data traffic originating from a wireless communications network received from a fixed-line access network, the system comprising: means to receive a data traffic flow from the fixed-line access network ; means to process received data traffic to determine a source address for said received data traffic; service association means comprising means arranged to associate said source address with a service identifier and means to select an onwards transmission path in dependence on the service identifier and to forward traffic on said selected path; and transmission control means comprising: means arranged to receive traffic on a said selected transmission path, means to identify received traffic as traffic carrying content of a predetermined type; and transmission quality control means arranged to control at least one transmission characteristic of the onwards transmission of said data traffic in a communications network in dependence said data type, wherein said transmission control means is configured to control said at least one transmission characteristic to reduce a quality of transmission of the data traffic to below a predetermined quality threshold in dependence on a said predetermined type of traffic.

The transmission characteristic experiencing the reduction in quality may be dependent on matching a said received traffic payload content type identifier with a reference content type identifier and/or may be in dependence the logical interface the transmission control means received said traffic on from said service association means.

The type of data traffic may be determined to have one or more transmission quality characteristics which are delay dependent, and the step of controlling the quality of transmission may comprise increasing the variability of the delay the predetermined type of traffic experiences in said wireless communications network.

The reduction in quality may be dependent on the service identifier associated with a cellular communications network service provider associated with the communications device.

The service selection gateway may forward said received traffic along a path selected in dependence on the service identifier associated with the source address of the traffic to a traffic management node, wherein the traffic management node implements a said traffic management policy on said received traffic of a predetermined type in dependence on the logical interface it receives said traffic on from said service selection gateway.

The above aspects and accompanying independent claims may be suitably combined with each other and any of the preferred embodiments and/or accompanying dependent claims in any apparent manner known to one of ordinary skill in the art.

The preferred embodiments of the invention will now be described with reference to the accompanying drawings, which are by way of example only and in which:
Figure 1 a shows schematically an architectural view of a communications system according to an embodiment of the invention;
Figure 1b shows schematically an alternative architectural view of a communications system according to another embodiment of the invention;
Figure 2 shows schematically a roaming device generating VoIP and non-VoIP traffic and how these are processed by a communications system according to an embodiment of the invention;
Figures 3A and 3B show schematically how different data flows may be processed by a communications system in accordance with an embodiment of the invention;
Figure 4 shows initial exemplary steps in a method of traffic management;
Figure 5 shows further exemplary steps in a method of traffic management according to an embodiment of the invention; and
Figure 6 shows further exemplary steps for a specific embodiment in which the transmission of VoIP traffic received from a WLAN is managed in accordance with an embodiment of the invention.

The best mode of the invention as currently contemplated by the inventors will now be described with reference to the accompanying drawings. Those of ordinary skill in the art will be aware that many alternative features could be implemented instead of those shown in the accompanying drawings and described in the detailed embodiments below, and unless explicitly excluded, the description of the detailed embodiments should be considered to implicitly include reference to such alternative features where such alternative features would be apparent to one of ordinary skill in the art. For the sake of clarity and brevity, features whose inclusion would be apparent to one of ordinary skill in the art as necessary for the invention to be implemented in practice may be omitted from the description or referred to only indirectly.

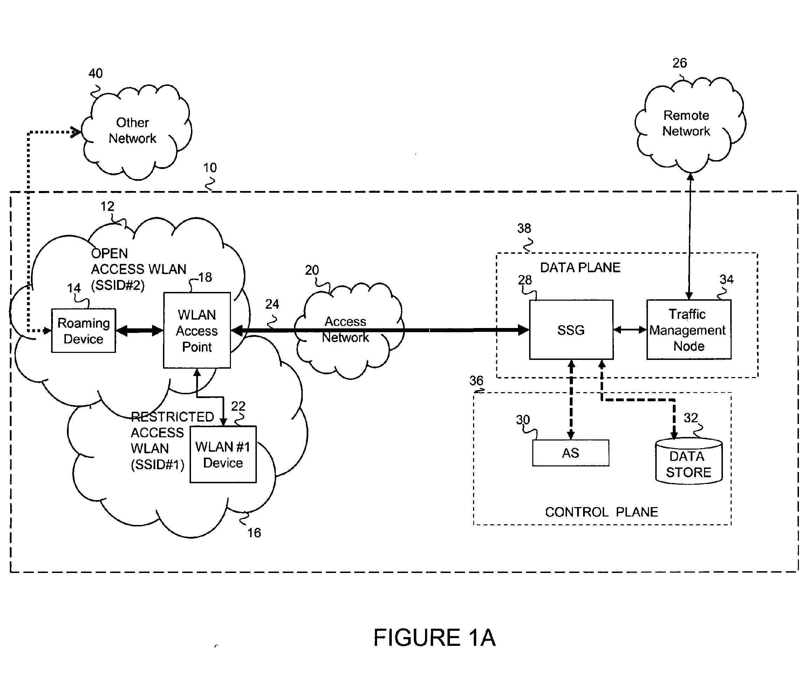

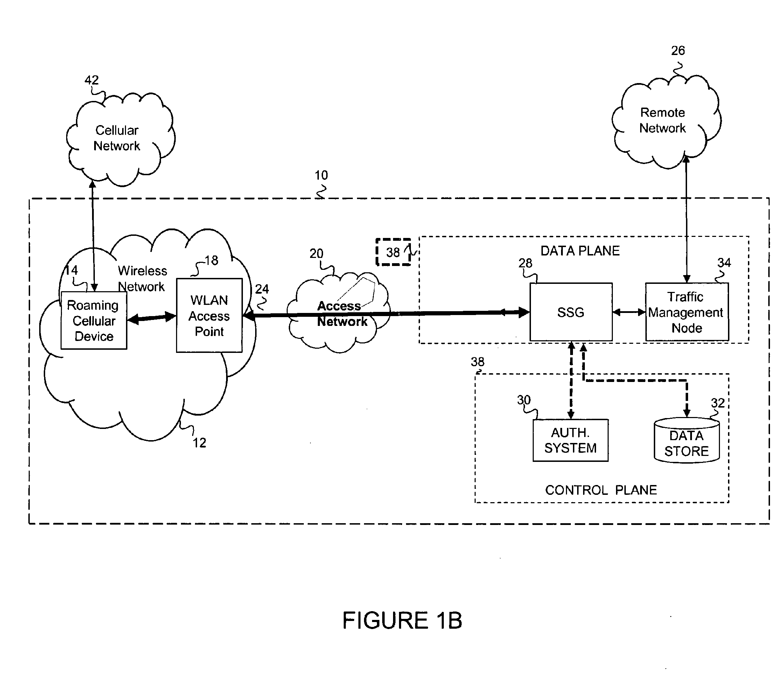

Figure 1 a of the accompanying drawings shows the architecture of a communications system 10 which seeks to inhibit the use of a WLAN 12 by a roaming device 14 generating of wireless data traffic of a particular type by using a method of transmission control according to an embodiment of the invention.

The communications system 10 shown in Figure 1 a illustrates a restricted access wireless local area network (WLAN) 16 which as shown is identified by the exemplary service set identifier SServicelD#1. WLAN 16 is provided by wireless network access point (WLAN AP) 18. It will be apparent to those of ordinary skill in the art that WLAN AP 18 requires appropriate connectivity to the access network 20. Such connectivity can be implemented using a suitably configured modem or equivalent connectivity device (not shown) which may be provided integrally as part of the WLAN AP 18 and/or be provided separably from the WLAN AP 18. In this way, the WLAN AP 18 is capable of establishing connectivity and if always connected, maintaining its connectivity to the access network 20. The WLAN AP 18 enables a suitably configured wireless communications device 22 to establish a communications link 24 over access network 20, for example, so as to gain access after suitable authentication to various data services via a remote network 26, for example, a web-service application accessible via the public internet 26. Typically the access network 20 comprises a broadband access network over a local loop copper or fibre network infrastructure supporting, for example, Digital Subscriber Line (xDSL etc) communications protocols etc. Remote network 26 is most likely to be a public internet network, but the invention is also suitable for use if the remote network 26 is a private network.

WLAN AP 18 is capable of providing more than one wireless communications network, for example, as shown in Figure 1A, it provides secondary WLAN 12 which provides access to remote network 26 to other communications devices 14 by enabling such devices to use a roaming service over the access network 20. The secondary WLAN 12 has a separate service set identifier, to distinguish it from the WLAN 16. Use of this secondary WLAN 12 is open to all devices which have subscribed to the appropriate roaming service, i.e. it is effectively open access only for those certain devices 14 which have been appropriately configured to use the roaming service for which WLAN 12 has been configured to provide access to. An example of such a roaming service is that provided by FON™, or BT FON™ and other community open wireless connectivity services in which each subscriber in the community is responsible for the provision of an open-access network, typically by configuring a WLAN AP which is capable of supporting multiple networks (such as WLAN AP 14) to provide the open-access or unrestricted network in addition to a restricted access network. Each open-access network enables other subscribers' devices to use the open-access network as a roaming connectivity service. In return for providing an open-access network, the subscriber is able to use their own suitable configured devices in the other subscribers' open-access networks when roaming.

The use of the open-access network 12 for roaming services reduces the bandwidth available for subscriber network traffic over the access network 26 as the bandwidth over communications link 24 will normally be shared at any time between a number of different users. The open-access and restricted networks12,16 which are provided by WLAN AP 18 each use bandwidth on communication link 24, and may be in contention with one or more other subscriber's traffic over this link (a typical contention ratio for a broadband service line being capped at around 50:1). Accordingly, the WLAN AP 18 is often configured to limit the amount of traffic from the roaming network 12 sent over communications link 24 so that it is less likely to affect the bandwidth available for the restricted access service subscriber's network (which is usually private). In this way, a number of WLAN APs (not shown) may similarly have roaming devices generating traffic which occupy bandwidth on shared access communications link 26.

As a result, it is very desirable if the roaming service is to offer reliable speeds to more than one roaming user in any given WLAN if the network resources required for transporting traffic from/to each device over communications link 26 is not excessive. Many applications require very high connection quality. One way of ensuring the required level of quality is by reserving network resources such as bandwidth, which can help in managing transmission errors and delays. However, such a solution is not always optimal in scenarios where contention ratios may create conflicts. Prohibiting the
use of the roaming service for certain applications can result in needless impairment of the roaming service unless such use is inhibited dynamically. Accordingly, it is helpful if use of the roaming service can be deterred but not prevented, particularly if only certain types of traffic and/or applications which utilise a lot of bandwidth resources and/or other network resources to maintain a good quality of service over the WLAN are inhibited.

An example is when a roaming service offers a means for roaming communications devices 14 to access many applications and services over the internet 26 which allows use of the WLAN roaming network 12 to connect via access network 20 for multi-media services such as voice communications (using, for example, VoIP applications) as well as for video communications, and for downloading audio and video data.

Real-time streamed data services, especially live services such as voice, or voice with video, communications impact the resources available for roaming devices, and can affect the resources available for subscriber services in the access network. Accordingly, it is desirable if a WLAN 12 which offers a roaming service is not used by a roaming device 14 for accessing some specific data services. It may be desirable to inhibit usage temporarily, for example, if more than a certain number of roaming users is concurrently using the roaming service WLAN 12, or permanently, for example, if the roaming communications device 14 has access to alternative wireless network connectivity for certain services, for example, via other wireless network 40. An example of another wireless network 40 is a cellular communications network or Wi-Max (e.g. 802.16) network, but it may alternative comprise another wireless 802.11 network which uses a different access network.

The embodiment of the invention shown in Figure 1a seeks to inhibit the use of the WLAN 12 for certain types of data services, when being accessed via WLAN 26 over access network 18 by implementing a method of transmission control for selective communications devices which are using the roaming service WLAN 12 provides.

As shown in Figure 1a, when roaming device 14 seeks to access internet 22, traffic is generated by the roaming device 14. The traffic is received via communications link 24 at a suitable network aggregation point 28 (for example a service selection gateway SSG) which is configured to authenticate the roaming device 14. The roaming device 14 can be authenticated automatically when the traffic is received or by a separate user interaction. After authentication the SSG is configured to direct traffic (typically here a flow of data packets, such as internet protocol (IP) packets) along a path to a forwarding address in accordance with a given service identifier (ServiceID). The SSG 28 determines which path to forward the data along by performing a look-up operation using the source address for the data packet follow to determine the ServiceID which is retrieved from a data store 32. Data store 32 holds an instruction set in association with a service identifier (ServiceID) which is then associable with the source address for the data packet flow. If no ServicelD can be retrieved, or if the received packet is otherwise recognised as comprising an access request requiring authentication, the SSG 28 forwards the access request to authentication server (AS) 30 for authentication.

AS 30 is configured to authenticate requests to use the roaming service using any suitable method known in the art which enables a ServicelD for the traffic flow to be obtained. For example, in Figure 1A, AS 30 authenticates by retrieving a ServicelD using a user identifier (USERID) which is provided either as part of a set of authentication credentials provided in the access request for the device traffic which is forwarded by the SSG. Alternatively, the AS 30 may be provided with the USERID and/or ServicelD in response to the AS 30 requesting such authentication information about the roaming device 14. For example, if the Dynamic Host Control Protocol is used the AS 30 queries a DHCP server for authentication information, and in return receives information about the device. In some embodiments of the invention, it is possible for the authentication credentials to include a device identifier (for example, a media-access control (MAC) address) which functions as a user identifier for the purpose of the present invention to enable the ServiceID for a traffic flow to be determined.

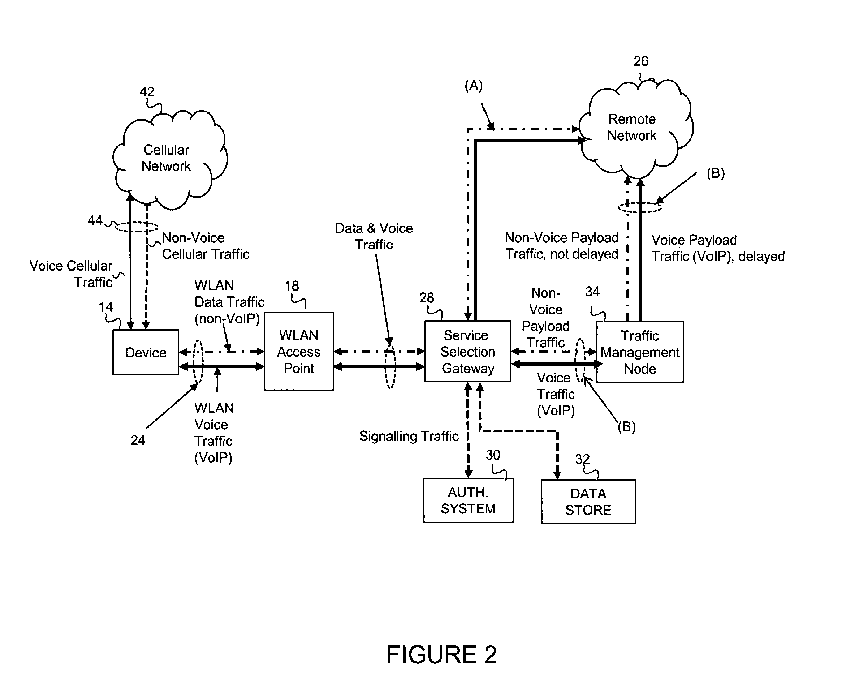

As shown in Figure 1A and 1B, the AS 30 performs a suitable look-up operation on service identifier data store 32 to retrieve a service identifier (ServiceID) using a USERID as an index field to retrieve the ServiceID. The ServiceID retrieved is then sent to the SSG 28 which then stores this in association with the source address (SA), for example, the IP source address of the access request in a suitable data structure in a suitable data store (for example, data store 32 as shown in Figure 1A,1B or 2). Whilst data store 32 is shown in these figures, those of ordinary skill in the art will appreciate that a distributed data storage system may be implemented in practical embodiments of the invention, and not all information may be stored in a single data record format, but may require several data records in several data stores to be suitably cross-indexed to implement the invention.

A ServicelD according to an embodiment of the invention, has a data structure which includes data indicating a traffic management policy which should be executed on traffic associated with that respective ServiceID. The traffic management policy is indicated, for example by appending additional data within existing fields of a conventional ServiceID data structure, or by providing data indicative of the traffic management policy to be applied within extension fields to the ServiceID. The traffic management policy data provides an indication as to whether the ServiceID is associated with a device for which certain types of traffic are to have their transmission modified by a traffic management node 34.
When SSG 28 receives a traffic flow comprising a stream of data packets, it performs a look-up on the source address (SA) on the traffic flow to retrieve the ServicelD which is indicated by the SA, either directly from data store 32 or indirectly receives the ServiceID via the authentication process the AS 30 carries out. If the ServicelD indicates that the traffic flow has a SA for which the ServiceID does not indicate any potential transmission modification, the traffic is forwarded directly onwards (not shown in Figures 1a or 1b, see path (A) in Figure 2). If the traffic flow has a SA for which the ServicelD indicates potential transmission modification, the SSG 28 is configured to forward the data packets to the traffic management node 34 for further inspection, and potential transmission modification depending on the type of payload data they are carrying, before the data packets are forwarded for onwards transmission over, for example, internet 26.

The traffic management node 34 thus receives traffic from WLAN 12 after the authentication process has been completed and only if the source address (SA) of the traffic is associated with a service identifier (ServiceID) which indicates that if the traffic comprises a predetermined type of payload data, then it is to have its traffic transmission modified.

Figure 1B shows an example of an alternative embodiment, in which roaming device 14 comprises a roaming cellular communications device which uses a wireless network 14 (for example, a WLAN providing in accordance with the 802.11x or 802.16 communication protocols). Wireless network 14 provided by WLAN AP 18 enables device 14 to access a roaming WLAN service, however, device 14 has alternative wireless voice and data communications connectivity via cellular communications network 42.

Similarly to the embodiment shown in Figure 1A, the control plane 36 of the communications system 10 selectively controls the transmission of traffic from device 14 in the data plane 38 by determining if the traffic originates from a device associated with a transmission modifying ServiceID. If the ServiceID indicates that the device can use an alternative communications mode for certain types of data traffic, the control plane is configured so that a traffic inspection is performed at traffic management node 24. At the traffic management node 24, depending on the type of payload being carried, the onwards transmission characteristics of the traffic is modified in accordance with the ServicelD traffic management policy.

Figure 2 shows in more detail, how the transmission of a traffic flow such as a real-time stream of data packets, for example, data packets carrying voice communications as payload, is modified in accordance with an embodiment of the invention.

A communications device 14 must have at least dual-mode communications functionality for it to be associated with a SID within the access network which implements a traffic management policy according to an embodiment of the invention. In the embodiment shown in Figure 2, communications device 14 comprises a cellular communications device and is capable of establishing a communications link 44 for voice and/or data traffic over cellular communications network 42 as well as a communications link 24 over WLAN network 14. Device 14 uses WLAN AP 18 to establish communications with a remote network 26. Remote network 26 may be a private network or a public network such as the Internet.

When the cellular communications device 14 is authenticated , the service identifier (ServiceID) retrieved by the authentication server 30 indicates if for that particular device 14 what traffic is to be forwarded to traffic management node 34 along path (B) or forwards directly towards its destination via remote network 26 along path (A). In this scenario, the dual-mode communications capability results in the ServiceID being configured so that some types of traffic are processed by the traffic management node. Accordingly, all traffic is forwarded to the traffic management node, where it is processed in accordance with the ServiceID as described herein below. If, for example, the device 14 had no alternative communications means, the ServiceID would not indicate special processing by the traffic management node, and accordingly all traffic from the device would follow path (A) on to the remote network and not be subjected to processing by the traffic management node.

Depending on the type of payload the data packets are carrying, the traffic management node 34 modifies the transmission of the traffic flow. The ServiceID provides a roaming service profile for specific types of data traffic generated by the device when using the roaming service. In one embodiment, the ServiceID indicates that the transmission should be modified in dependence on whether the authentication request is determined to have been generated by a device for which alternative means of communication for certain types of data exists. If the look-up performed using service database 32 indicates that the roaming device 14 is capable of using an alternative communications network 40 which provides communications service for specific types of data services, for example, real-time streamed communications services such as live voice or video communications, the ServiceID retrieved is one which the provider of the roaming service has indicated is for a device which is capable of using an alternative type of communications network, such as a cellular communications network.

In one embodiment, traffic management node 34 has multiple logical interfaces and the SSG is configured to forward a data flow to a predetermined logical interface depending on the ServiceID type associated with the SA of the data flow. In this embodiment, for example, a logical interface can be implemented by associating the data flow with an appropriate virtual LAN (VLAN) identifier, which is associated with one or more specific input ports of the traffic management node 34. For example, a data flow associated with a particular VLAN identifier (e.g. VLAN 100) is forwarded to a particular logical port on the traffic management node 34 which indicates that a variable delay up to a predetermined maximum delay level should be applied to any data packets carrying payload data requiring playback in real-time. If a data flow is associated with another particular VLAN identifier (e.g. VLAN 200) then all voice data should be similarly delayed, if associated with VLAN 300, then all audio and video data is to be delayed, and if associated with VLAN 400, all packets carrying payload data requiring live playback in real-time are to be variably delayed with a different delay profile to that used in other logical ports.

The traffic management mode 34 determines the type of payload using any suitable deep packet inspection technique, for example, it may examine the traffic characteristics and refer these to a database of known traffic characteristics for certain data types to determine a payload content identifier. If the payload content received on a particular logical interface (e.g. input port) has a payload content identifier which matches a payload content identifier for data packets for which the node 34 is configured to perform a transmission modification, the traffic management node modifies the transmission of the all of the data packets received on that logical interface according to the type of content so identified.

In one embodiment of the invention as shown in Figure 1A, the WLAN AP 18 broadcasts its roaming SSID which enables one or more roaming devices 14 to connect to a roaming service for internet access after the devices have been authenticated. A secure tunnel, for example, an IPsec tunnel, is established for traffic from the roaming network 12 over the access network 20. In the data plane the IPSec traffic is suitably terminated and the traffic originating from the roaming device is now available for the SSG 28 to process. SSG 28 blocks the device traffic until the device is authenticated by AS 30. As shown in Figures 1A and B, a communications device 14 may require authentication by AS 30 to use a roaming WLAN service. This authentication may use any one of a variety of suitable authentication techniques known in the art for retrieving a ServiceID for the traffic from that device. However, the invention results in a special ServicelD being retrieved. This special service identifier indicates that additional traffic management functionality is to be triggered for certain types of data sent using the roaming service and acts as a flag to the SSG 28 for the forwarding procedure for traffic flows from a device. Depending on the ServicelD associated with a received traffic flow, SSG 28 forwards traffic received from some communications devices straight to the Internet 26 (e.g. via route (A) shown in Figure 2) but forwards other traffic associated with one of the different special types of ServicelD to the traffic management node 34.

A special ServiceID according to one embodiment results in traffic having its transmission modified, for example, an additional variable delay is applied by the traffic management node 34 in accordance with the traffic management policy indicated by the SSG 28 so that certain predetermined types of data streams originating from a roaming device which are received by the SSG 28 experience an increased amount of transmission jitter in their onwards transmission.

The amount of delay applied by the traffic management node 34 is determined for specific types of content payload carried by the packets forming the data stream in accordance with the ServicelD associated with the source address of the data stream, and may vary for the different types of data content identified by the traffic node. As shown in Figure 2, a stream of data packets carrying voice data as their content payload is subject to a variable delay applied by the traffic management node 34 which results in a suitable drop in the quality of service experienced when the data packets are played back in real-time at their destination. If the drop in quality of service (QoS) for the connection is sufficiently high, the user of the device may terminate the connection over the LAN and seek to use the cellular communications network instead. Alternatively, or in addition, the application running on the device which established the connection may be suitably configured to detect the QoS and if this is determined to be below a certain threshold condition, it may then automatically terminate the connection. Some devices may be configured to automatically terminate VoIP application calls and redirect the call to the cellular communications network 42.

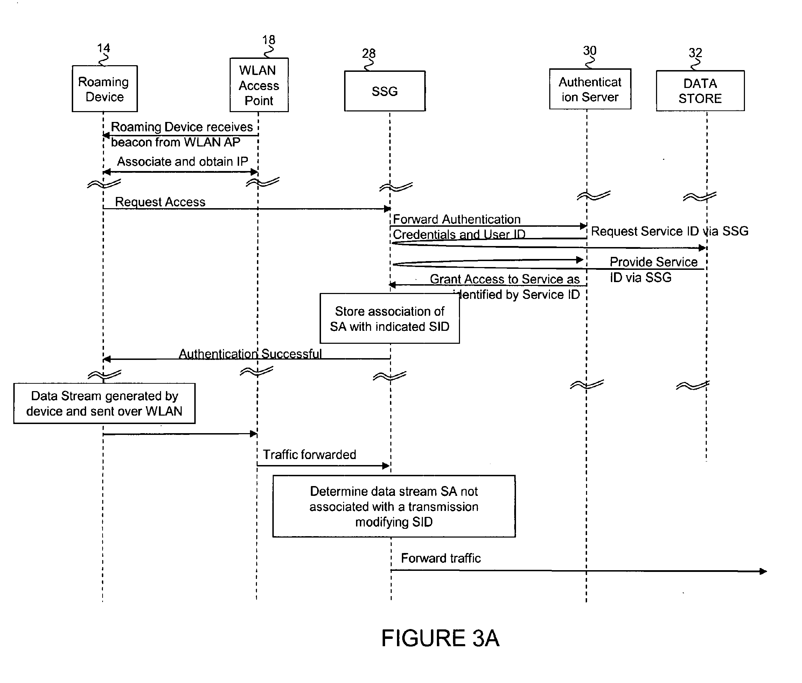

Figure 3A shows the flow of data between the system components of the previous figures which enabling a method of transmission control to be implemented in communications system 10. As shown in Figure 3A, roaming device 14 detects a beacon from WLAN AP 18 for wireless network 12 and associates with the wireless network 12 to obtain an IP address. Subsequently, when the device seeks to access remote network 26 it the traffic it generates needs authentication to use wireless network 14. In one embodiment, the device 14 SSG generates an access request which is forwarded via the WLAN AP 18 to SSG 28, and on from SSG 28 to AS 30. The access request contains authentication credentials such as the IP address the communications device 14 has been allocated and a suitable user (or alternatively device) identifier. AS 30 uses the user identifier to perform a look-up type operation to retrieve the ServicelD. AS 30 queries via SSG28 a data store 32 functioning as a service identifier database using the UserID and receives the associated (ServiceID) for that particular user (or device) UserID via the SSG 28. Assuming that the authentication is a success, AS 30 then forwards the service identifier to the SSG 28, which stores the ServicelD in association with the IP address assigned to the authenticated roaming device 14. The roaming device 14 is then notified of the successful authentication and provided with any additional data required to use the roaming service.

When the roaming device subsequently seeks to access a remote network 26 such as the Internet, for a particular application, it will generate traffic which is sent to SSG for forwarding on towards its destination assuming a valid ServicelD is determined by the SSG to be associated with the source address of the device. As shown in Figure 2, if a device generates a data stream which is forwarded to the SSG via WLAN AP 18, the SSG looks up in a suitable data store (not shown in Figure 3A) the instruction set for the IP address of the data packets corresponding to the ServicelD the authentication server has previously provided. As shown in Figure 3A, the ServicelD indicates that no transmission modification is to be performed for any type of traffic from that device, the data packets are forwarded on towards their destination without any transmission modification.

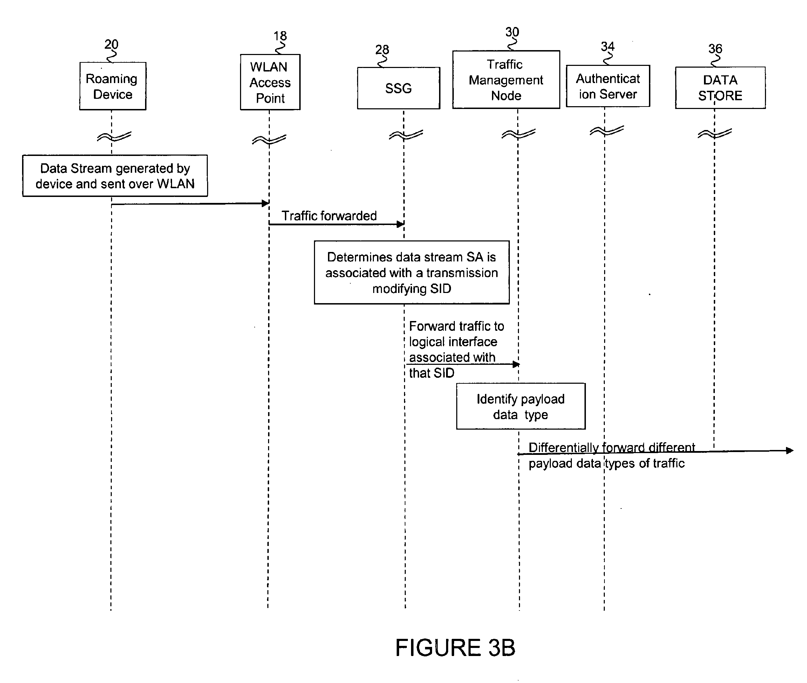

Figure 3B retains the numbering scheme of the previous Figures, and shows the data flow between the system components in the case where the ServicelD indicates that some form of transmission modification may be performed for some types of traffic from that device. In Figure 3B, the ServiceID indicates that the SSG 28 should forward all data packets from a particular source address to the traffic management node 34. Traffic management node 34 identifies the likely type of payload content using a suitable deep packet inspection technique such as is known in the art. Each different "special" type of ServicelD is associated by the SSG 28 with a different logical interface on the traffic management node 34 by the SSG, for example, a different input port or virtual local area network (VLAN) identifier. The SSG is configured to forward all packets in a traffic flow associated with a particular special ServicelD to the appropriate logical interface (e.g. input port) of the traffic management node 34. Depending on the logical interface it has received the packets on, which will be one the SSG has associated with a particular SID traffic management rule and in dependence on the type of traffic identified, the traffic management node 34 then modifies the transmission of the data packets forming a particular traffic flow received on that logical interface in accordance with the traffic management policy it has been configured to associate with that logical interface/port.

In one embodiment of the invention, the type of ServicelD indicates whether voice and/or video and/or any other real-time streamed traffic is to be subjected to an increased transmission jitter. If the SSG 28 assigns traffic flows with a ServicelD type "A" to a VLAN A, it is output to arrive on logical port 1 at the traffic management node 34. Traffic flows with a ServicelD of type "B" however, are assigned to VLAN B which is received on logical port 2 at the traffic management node 34. Similarly, traffic flows associated with a ServicelD of type "C" are assigned to a VLAN C which is received on logical port 3 at traffic management node 34.

The traffic management node is configured to delay all voice and video traffic received from VLAN A on logical port 1 by a pseudorandom amount up to say 1 s, to delay video traffic only received from VLAN B on logical port 1 by a pseudorandom amount up to say 2s, and to delay voice traffic from VLAN C on logical 3 by a pseudorandom amount up to say 1 s and to delay video traffic from VLAN C received on logical port 3 by a pseudorandom amount up to say 1 s, with real-time live streamed video receiving an additional 15s fixed delay.

The type of traffic which is received on a particular logical port is assigned a content-type identifier by performing a deep-packet inspection technique on one or more or all of the packets received in the traffic flow. In one embodiment, the first n packet(s) in a traffic flow received at the traffic management node 34 is/are subject to a deep-packet inspection where n = 1 or more or all packets in the sequence of packets forming the traffic flow received for processing by the traffic management node 34. The deep-packet inspect determines the payload content of the n packet(s) and from this generates a traffic-flow content-type identifier which is assigned to the entire traffic-flow associated with the first n packet(s) . This traffic-flow content-type identifier is then compared to known the content-type identifiers associated with the content-type identifiers of the traffic management policy associated with that traffic flow's ServicelD. If the traffic-flow content type identifiers match content-type identifiers which a particular ServicelD has indicated should receive additional processing in accordance with that traffic management policy, i.e., to receive an additional amount of variable and/or fixed delay, the traffic management node 34 applies the policy by processing the relevant types of packets to add the indicated amount of variable and/or fixed delay.

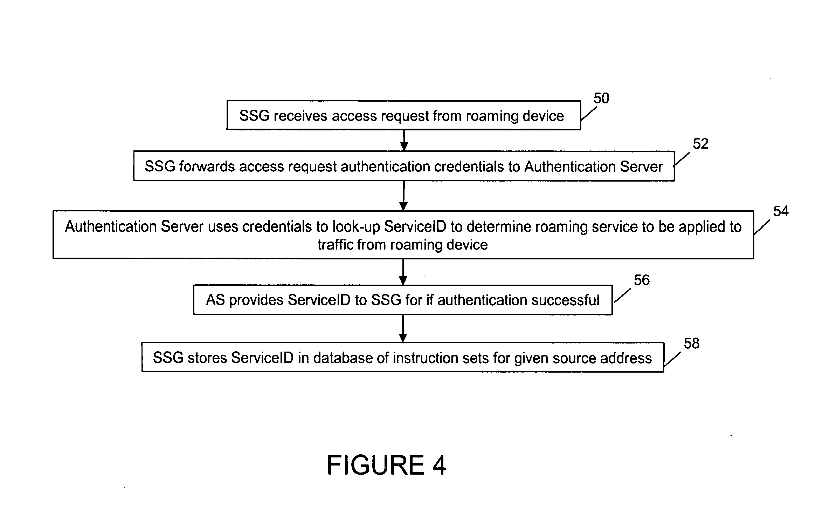

In an embodiment in which the SSG 28 is not able to directly retrieve a ServicelD for a received traffic flow, Figure 4 shows schematically the steps which determine what ServicelD is to be associated by the SSG 28 for a roaming device 14, which typically will associated the ServiceID with the IP address assigned to the roaming device, and are generally known in the art. As shown in Figure 4, the SSG first receives an access request from a roaming device 14 which has successfully associated with a WLAN 12 (step 50). The SSG forwards the credentials provided by the device to the AS 30. The AS 30 then looks up the ServicelD using either a user identifier or a device identifier by querying data store 32 via SSG 28 (see Figure 3A). If the authentication credentials are correct, the AS 30 then forwards the ServiceID to the SSG 28 (step 56), which is then able to associates the ServicelD with the IP source address of the roaming device 14 and stores the association in a suitable instruction set held in an appropriate data store which may be data store 32 or another type of data store (not shown),known as suitable in the art for storing the different types of ServiceIDs.

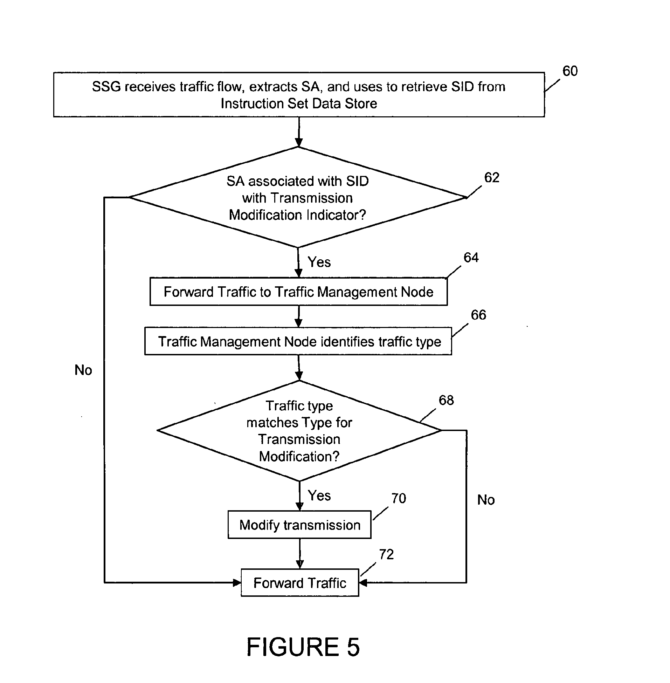

Figure 5 shows the steps which occur in a method of transmission control for data forwarded by a WLAN access point in accordance with an embodiment of the invention, which is triggered by the SSG retrieving a special type of ServicelD from its instruction set. According to the embodiments of invention, the special type of ServicelD indicates that for certain types of content, data packets generated by the roaming device to which a particular IP address has been assigned are to have their transmission modified.

As shown in Figure 5, when the SSG receives a particular traffic flow, it determines the source address SA of the data packets, which in most embodiments of the invention comprises an IP address assigned to the roaming device either when the roaming device 14 associates with the WLAN 12 or when the device is authenticated by SSG 28. If the SSG 28 retrieves one of the special ServicelDs, which in one embodiment of the invention comprise a ServicelD indicating some types of data packets may be subjected to a transmission delay, it determines from the type of ServicelD via which logical interface it should forward the data packets to the traffic management node on (step 64). When the traffic management node 34 receives data it identifies the type of data being carried as payload in the data packets it has received (step 66). If the type of data identified matches that of a content identifier for which it has been configured to apply a variable amount delay, then the traffic management node modifies the transmission of the data packets by applying a variable amount of delay in accordance with the logical interface via which the data packets were received (step 70), and then forwards the packets after the delay has been applied on towards their destination address (step 72).

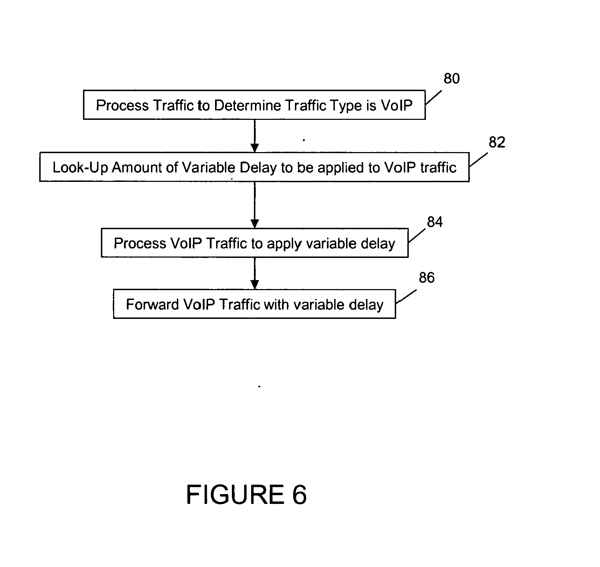

Figure 6 shows an exemplary embodiment in which a ServicelD is associated with a cellular communications device 14 when the device is authenticated by SSG 28 for use of WLAN 1 which indicates that if a traffic flow comprises a data stream containing voice communications as its payload is received via WLAN 14, then the packets forming the traffic flow are to be subject to a variable delay of up to, for example, 3 seconds. For example, if the device is uses a VoIP application instead of cellular network 42, then when the VoIP traffic is received via WLAN 12, the SSG 28 forwards the VoIP traffic to the traffic management node 34. If traffic management node 34 then determines the payload content of the data packets forming that particular traffic flow from the roaming device 14 comprises voice communications (step 80), it then looks up for data received on that logical interface the amount of variable delay to be applied to that type of data type (step 82), for example, 1 second up to 3 seconds, applies an amount of variable delay which varies up to the given limit (step 84) and then forwards the data packets on toward the appropriate call termination point via Internet 26 (step 86).

Thus a traffic management node 34 according to an embodiment of the invention, differentiates between "voice" traffic and/or other types of data packets carrying audio and/or video data. The traffic management node 34 is configured to selectively reduce the QoS of each predetermined type for example, by increasing the variability of delay the traffic experiences. The delay may be directly applied by node 34, or, in an alternative embodiment, if the remote network is of a suitable type then the node may modify the data packet header fields to increase the delay tolerance beyond that which would be acceptable for such types of data packet.

The amount of variable delay/reduction in QoS to be applied to the packets forming a particular traffic flow is indicated by the type of ServicelD the traffic is associated with. A ServicelD traffic management policy in this way can be imposed on traffic originating from a device with at least dual communications modes which is using a WLAN in a roaming context. The traffic management policy (or equivalently the ServicelD type associated with a traffic management policy) can be determined by a network operator for the access network in which the traffic management node 34 resides, or other network in which the relevant ServicelDs provide a service or by any other third party providing services associable with a ServicelD. In this way, a provider of the WLAN roaming service, or a cellular communications network service provider for a particular device, can specify the type of ServicelD traffic management policy to be applied to devices generating certain types of traffic. For example, a ServicelD traffic management policy can be set for a device according to the service contract established between a cellular communications network provider with a subscriber of the cellular communications service the device is configured to use.

The network access point 18 does not need to provide multiple networks in all embodiments of the invention. By increasing the amount of variable delay of certain types of traffic received from a WLAN AP in the access network, the invention deters use of the WLAN the AP provides, and so deters use of the access network for such types of traffic. It enables a network operator of an access network to indirectly shape traffic received from devices using a WLAN as an alternative to a cellular communications network if the drop in QoS for certain types of traffic results in the traffic being rerouted across the cellular communications networks. The invention can be implemented whenever it is desirable for users to experience a sufficiently low QoS to make the use of another network preferable, which indirectly enables a form of dynamic access control by the access network operator. As a device may be generating the traffic by running an application which is configured to drop the connection and/or terminate an application automatically in the event the traffic flow QoS drops below a predetermined level. Alternatively, a user of the device may manually terminate a WLAN based session or application running a session over the WLAN due to the poor quality of service.

The traffic management policy is thus achieved using a transmission control which is implemented permanently and/or temporarily and/or periodically (or aperiodically), and the transmission control may, for example, be imposed responsive to only to one or more network conditions and/or be determined by the time of day, etc.

In one specific embodiment a connection request is received over WLAN from a communications device 14 which has cellular communications capabilities. When the communications device 14 detects an open-access WLAN or Wi-Fi hotspot is available, if its user tries to use a VoIP service, after the user has authenticated, the voice data transmission is modified to lower its QoS sufficient to make use of the cellular network infrastructure for the voice service either necessary or at least more desirable to receive good QoS for such a service. Accordingly, one embodiment of the invention provides a method of controlling the amount of variable delay applied in an access network to data generated by a mobile communications device which uses a WLAN for admittance to the access network. The access network is a broadband copper or optical access network. In one embodiment, the method distinguishes selectively between data of a predetermined type originating from those cellular communications devices associated with predetermined service provider and the same type of data originating from devices not associated with a predetermined service operator so that the service provided by the predetermined service operator is basically guaranteed to always to provide a better QoS for voice. Other types of data generated by the same cellular communications devices are not identified by the ServiceID for transmission modification, which enables internet browsing, and file downloads to remain unaffected.

In one embodiment of the invention as shown in Figure 2, a WLAN AP 18 broadcasts a wireless network service set identifier SSID #2 for an open access wireless network 12. Visiting device 14 can then connect and traffic from the network 12 with SSID #2 passes to the service selection gateway 28, which blocks the customer traffic requiring authentication by authentication server system 30. The visiting device 14 authenticates with the authentication server system 30 in one of a number of different ways. The authentication process provides the AS 30 with the roaming device identity and AS 30 then downloads the appropriate service identifier from the service database 32, either directly or via the SSG 28. AS 30 (assuming the correct credentials were received) then informs SSG 28 the traffic is to be allowed access and the AS 30 may be configured to instruct the SSG 28 on the basis of the Service Identifier it provides what a variable delay service is to be provided for selected traffic type(s) and that this variable delay element of the service to be started. The SSG 28 then routes customer traffic to the traffic management node 34 which provides the indicated amount of additional variable delay for the indicated traffic type(s). The node 34 which provides the variable delay addition looks at the traffic type and adds variable delay to specific traffic types before routing those to the remote network, e.g., Internet 26. The specific traffic types which are subjected to variable delay within the WLAN traffic are not subjected to this delay when sent via the cellular network, hence allowing a service and/or device provider to manage the customer experience between the two networks.

In one embodiment, this provides a method of managing data traffic carried over a broadband communications network, where the AP 18 provides a broadband, e.g. Asymmetric Digital Subscriber Line (ADSL), or a similar digital communications service for an access network such as very-high-bit rate DSL (e.g. VDSL, VHDSL). The method comprises receiving a stream of data packets originating from a source address associated with a communications enabled device; determining if the communications-enabled device is associated with a predetermined service identifier; and, if so determining if the data packets comprise a predetermined type of traffic, and if so, controlling the transmission of said data packets over said broadband communications network by increasing the variability of the delay experienced by said stream of packets selectively over the variability of delay experienced by other types of data traffic generated by said device.

## Claims

1. A method of controlling the transmission of wireless data traffic originating from a mobile communications device having multiple wireless communications network access capabilities, the method comprising:
receiving traffic from a local area network;
determining a source address for said traffic;
associating said source address with a service identifier;
modifying at least one characteristic of a transmission service for traffic of at least one predetermined type having said source address, said transmission characteristic being modified in dependence on said service identifier and applied to traffic to be forwarded out of said local area network; and
forwarding said traffic for onwards transmission with said modified transmission characteristic.

2. A method as claimed in claim 1, wherein a said predetermined type of traffic comprises a real-time stream of data packets, and wherein said characteristic of the transmission service is modified by applying an additional variable delay to said data packets.

3. A method as claimed in claim 2, wherein said real-time stream of data packets comprise data packets carrying audio data as payload.

4. A method as claimed in claim 2, wherein said real-time stream of data packets comprise data packets carrying video data as payload.

5. A method as claimed in claim 3 or 4, wherein said real-time stream of data packets comprise data packets carrying voice data as payload.

6. A method as claimed in claim 5, wherein said data packets carrying voice data as payload comprise Internet Protocol data packets carrying voice traffic (VoIP).

7. A method as claimed in any previous claim, wherein responsive to the modified transmission characteristics of said traffic, said device automatically terminates an application generating said traffic.

8. A method as claimed in claim 7, wherein said other communications network comprises a cellular communications network.

9. A method of managing data traffic carried over a broadband communications network, the method comprising:
receiving a stream of data packets originating from a source address associated with a communications enabled device;
determining if the communications-enabled device is associated with a predetermined service identifier; and, if so
determining if the data packets comprise a predetermined type of traffic, and if so, controlling the transmission of said data packets over said broadband communications network by increasing the variability of the delay experienced by said stream of packets selectively over the variability of delay experienced by other types of data traffic generated by said device.

10. A communications system arranged to manage data traffic originating from a wireless communications network received from a fixed-line access network, the system comprising:
means to receive a data traffic flow from the fixed-line access network ;
means to process received data traffic to determine a source address for said received data traffic;
service association means to associate said source address with a service identifier,
means to select an onwards transmission path in dependence on the service identifier and to forward traffic on said selected path; and
transmission control means comprising:
means arranged to receive traffic on a said selected transmission path,
means to determine if received traffic is of a predetermined type; and
transmission quality control means arranged to control at least one transmission characteristic of the onwards transmission of said data traffic in a communications network in dependence said data type, said transmission control means being configured to control said at least one transmission characteristic to reduce a quality of the onwards transmission of the data traffic to below a predetermined quality threshold in dependence on said received traffic type and the logical interface it has received said traffic on.

11. A system as claimed in claim 10, in which said type of data traffic is determined to have one or more transmission quality characteristics which are delay dependent, and the step of controlling the quality of transmission comprises increasing the variability of the delay the predetermined type of traffic experiences in said wireless communications network.

12. A system as claimed in any one of previous claims 10 or 11, in which the data of the predetermined type comprises voice data.

13. A system as claimed in any one of previous claims 10 to 12, in which the amount of reduction in quality is determined by when authenticating the device and is dependent on the service identifier associated with a cellular communications network service provider associated with the communications device.

14. A system as claimed in any one of previous claims 10 to 13, wherein a service selection gateway forwards said received traffic along a path selected in dependence on the service identifier associated with the source address of the traffic to a traffic management node, wherein the traffic management node implements a said traffic management policy on said received traffic of a predetermined type in dependence on the logical interface it receives said traffic on from said service selection gateway.
